(19) **Europäisches Patentamt / European Patent Office / Office européen des brevets**

(11) **EP 1 574 881 B1**

(12) **EUROPEAN PATENT SPECIFICATION**

(45) Date of publication and mention
of the grant of the patent:
**30.06.2010  Bulletin 2010/26**

(51) Int Cl.:
*G02B 1/11* (2006.01)       *G02B 5/02* (2006.01)
*C03C 17/00* (2006.01)

(21) Application number: **05250988.2**

(22) Date of filing: **22.02.2005**

(54) **Optical member with an antireflection film having fine irregularities on the surface, production method for the same**

Optisches Element mit Antireflexfilm mit feinen Oberflächen-Unebenheiten, dessen Herstellungsverfahren

Elément optique avec un film antireflet comportant des fines irrégularités de surface, sa méthode de fabrication

(84) Designated Contracting States:
**DE FR GB**

(30) Priority: **23.02.2004  JP 2004046257**
         **13.01.2005  JP 2005006760**

(43) Date of publication of application:
**14.09.2005  Bulletin 2005/37**

(73) Proprietors:
• **CANON KABUSHIKI KAISHA**
  **Ohta-ku**
  **Tokyo (JP)**
• **Osaka Prefecture University**
  **Osaka 599-8531 (JP)**

(72) Inventors:
• **Kotani, Yoshinori**
  **Tokyo (JP)**
• **Yamada, Masayuki**
  **Tokyo (JP)**

• **Kubota, Makoto**
  **Tokyo (JP)**
• **Zhang, Zuyi**
  **Tokyo (JP)**
• **Tatsumisago, Masahiro**
  **Sakai-shi, Osaka (JP)**
• **Tadanaga, Kiyoharu**
  **Sakai-shi, Osaka (JP)**
• **Minami, Tsutomu**
  **Osakadayama-shi, Osaka (JP)**
• **Matsuda, Atsunori**
  **Toyohashi-shi, Aichi-ken (JP)**

(74) Representative: **TBK-Patent et al**
    **Bavariaring 4-6**
    **80336 München (DE)**

(56) References cited:
    **WO-A-98/45113      US-A- 4 830 879**
    **US-A- 5 948 481**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an optical member and to a production method for optical member.

To be specific, the present invention relates to an optical member comprising a transparent antireflection film having fine irregularities mainly composed of alumina on a surface of a transparent thin film layer containing at least one component selected from the group consisting of zirconia, silica, titania, and zinc oxide. Further, the present invention relates to optical members using the transparent antireflection film including: various displays such as a word processor display, a computer display, a TV display, and a plasma display panel; polarizing plates used for liquid crystal display devices; and sunglass lenses, prescription glass lenses, finder lenses for cameras, prisms, fly-eye lenses, toric lenses, and the like, all made of transparent plastics. Further, the present invention relates to optical members including: various optical lenses employing the aforementioned optical members for an image pickup optical system, an observation optical system such as binoculars, a projection optical system used for a liquid crystal projector or the like, and a scanning optical system used for a laser beam printer or the like; covers for various measuring instruments; and windows of cars, trains, and the like.

Numerous films each having fine irregularities on a surface are proposed. Of those, many films are proposed for applications as antireflection materials. For example, there is proposed an antireflection film composed of a polyurethane resin layer having fine irregularities on a surface and an amorphous fluorine-containing polymer provided on the fine irregular surface, as an antireflection film having a fine irregular structure formed on a surface through transfer using a mold having a fine irregular structure (see Japanese Patent Application Laid-Open No. 2001-091706, for example).

Further, there is proposed an antireflection film having a fine irregular surface with a height of 0.01 $\mu$m to 0.1 $\mu$m, which is a coating film formed using a dispersion liquid containing silicon alkoxide and silicon dioxide fine powder, as an antireflection film having a fine irregular structure formed on a surface through dispersion of fine particles in the film (see Japanese Patent Application Laid-Open No. H09-249411, for example). Those techniques have problems in transparency due to light diffraction and scattering caused by a large lateral size of the fine irregular structure, or a problem of a small antireflection effect due to a longitudinal size thereof being too small, in contrast. Further, a single film component may cause undesirable reflection at an interface between a film and a base material with poor matching in refractive indexes of the film and the base material, and a large antireflection effect may not be expected for an arbitrary base material.

As an example of a method of forming a thin film having fine irregularities on a surface, a sol-gel method is known for forming a transparent thin film having a flower-like alumina fine irregular structure (see "Journal of American Ceramic Society", 1997, 80(4), 1040-1042; "Chemistry Letters", 2000, 864; Japanese Patent Application Laid-Open No. H09-202649; and Japanese Patent Application Laid-Open No. 2001-017907, for example). There is disclosed a transparent thin film having a flower-like alumina fine irregular structure prepared by: forming a thin film using an application solution of aluminum butoxide stabilized with ethyl acetoacetate; subjecting the thin film to heat treatment at 400°C; and immersing the thin film in boiling water (see "Journal of American Ceramic Society", 1997, 80(4), 1.040-1042; and Japanese Patent Application Laid-Open No. H09-202649, for example). Further, there is disclosed a flower-like alumina fine irregular structure prepared by forming a film and immersing the film in warm water without subjecting the film to particular heat treatment (see "Chemistry Letters", 2000, 864; and Japanese Patent Application Laid-Open No. 2001-017907, for example).

In the transparent thin film having a flower-like alumina fine irregular structure prepared through a sol-gel method, a size of the surface fine irregular structure can be controlled by changing a warm water treatment temperature and a warm water treatment time period. However, the aforementioned alumina single component film has limitations in the surface structure and the size thereof. For example, Japanese Patent Application Laid-Open No. H09-202649 discloses a flower-like transparent alumina film having such a feature that an average surface roughness thereof is 17 nm or more. However, an actual maximum surface roughness is about 30 nm, and no film having a surface roughness of 30 nm or more is obtained. The thin film composed of the alumina single component and having a fine irregular structure has a narrow range for controlling the size of the surface fine irregular structure. Further, the single film component may cause undesirable reflection at an interface between the film and a base material with poor matching in refractive indexes of the film and the base material, and a larger antireflection effect may not be expected for an arbitrary base material.

Further, there is disclosed a method of obtaining an anti-fogging coating film by immersing a film of silica and alumina composite oxide in hot water under heating (see Japanese Patent Application Laid-Open No. H10-114543, for example). Here, the film is prepared by using ethyl silicate as a starting material for silica and an alumina fine particle dispersion sol as a raw material for alumina. The thus-obtained film has high haze and poor transparency with a surface roughness exceeding about 20 nm, and desirably has a surface roughness of about 20 nm or less. The film has problems of insufficient antireflection performance due to a small size of the surface irregular structure. Further, undesirable reflection may occur at an interface between the film and a base material, and thus antireflection performance may degrade.

As described above, the conventional techniques do not provide a sufficient range for controlling the size of irregularities of a film having a fine irregular structure on the surface, and do not develop sufficient antireflection performance.

Further antireflection films are described in US 5,948,481, WO 98/45113 and US 4,830,879.

The present invention has been made in view of the conventional problems, and an object of the present invention is therefore to provide a film in which a fine irregular structure on a surface may be controlled in a wide range, and a production method for the same. Another object of the present invention is to provide a transparent antireflection film which may be applied to an arbitrary transparent base material and may show an excellent antireflection effect for visible light by reducing reflection at an interface between the base material and the irregularities, and to provide an optical member using the same.

The present invention is specified in claims 1 and 7.

A film structure of the optical member of the present invention includes fine irregularities mainly composed of alumina on a surface of a transparent thin film layer containing at least one component selected from the group consisting of zirconia, silica, titania, and zinc oxide. Further, a content of the component of the transparent thin film layer can be controlled. Thus, the transparent thin film layer may have a refractive index between those of the fine irregularities and the base material. The refractive index between the fine irregular structure and the base material is continuously varied, and reflection at an interface between the fine irregular structure and the base material may be reduced to minimum. Further, the size of the fine irregularities can be controlled in a wide range to effectively reduce reflection at an interface between the film and air. The optical member of the present invention can attain a significant effect exceeding those of the conventional techniques.

The transparent antireflection film of the optical member of the present invention has fine irregularities mainly composed of alumina on a surface of a transparent thin film layer containing at least one component selected from the group consisting of zirconia, silica, titania, and zinc oxide, in which a height of the fine irregularities is 0.005 $\mu$m to 5.0 $\mu$m, an average surface roughness Ra' is 5 nm or more, and a surface area ratio Sr is 1.1 or more. In the present invention, at least component selected from the group consisting of alumina, zirconia, silica, titania, and zinc oxide is formed into a composite, to thereby provide a wide range for controlling the fine irregular structure compared with that of an alumina single component thin film having a surface fine irregular structure.

Further, the optical member of the present invention is produced by providing a transparent antireflection film on a base material. To be specific, the optical member of the present invention is produced by providing a transparent thin film layer containing at least one component selected from the group consisting of zirconia, silica, titania, and zinc oxide between the base material and the fine irregularities. Further, the content of the component in the transparent thin film layer can be controlled. Thus, the transparent thin film layer may have a refractive index between those of the fine irregularities and the base material, and the refractive index between the fine irregular structure and the base material may be continuously varied.

As described above, the transparent antireflection film may show an excellent antireflection effect for visible light of low reflectance over wide spectrum for use on any base material. Further, the transparent antireflection film of the present invention is entirely composed of inorganic components, and the whole production process may be performed at 100°C or less. Thus, the transparent antireflection film may have excellent heat resistance and may be applied to a base material having poor heat resistance such as an organic polymer. As described above, the transparent antireflection film may show an excellent antireflection effect for visible light and may provide a transparent antireflection film and an optical member of excellent productivity, respectively.

The invention will now be described, with reference to the drawings, in which:

Fig. 1 is a photograph showing a result of FE-SEM observation of a thin film of Example 1 formed on a glass substrate and having fine irregularities on a surface from above (magnification of 30,000);

Fig. 2 is a photograph showing a result of cross-section TEM observation of the thin film of Example 1 formed on a glass substrate and having fine irregularities on a surface, in which symbol a represents fine irregularities mainly composed of alumina of the present invention, symbol b represents a thin film layer supporting the fine irregularities, and symbol c represents a substrate (magnification of about 200,000);

Fig. 3 is a photograph showing a result of cross-section TEM observation of a thin film of Example 5 formed on a glass substrate and having fine irregularities on a surface in which symbol a represents a carbon film used during TEM observation, symbol b represents fine irregularities mainly composed of alumina according to an embodiment of the present invention, symbol c represents a thin film layer supporting the fine irregularities, and symbol d represents a substrate (magnification of about 200,000);

Fig. 4 is a front view of an optical member of Example 6 according to an embodiment of the present invention;
Fig. 5 is a sectional view of the optical member of Example 6 according to an embodiment of the present invention;
Fig. 6 is a front view of an optical member of Example 7 according to an embodiment of the present invention;
Fig. 7 is a sectional view of the optical member of Example 7 according to an embodiment of the present invention;

Fig. 8 is a front view of an optical member of Example 8 according to an embodiment of the present invention;
Fig. 9 is a sectional view of the optical member of Example 8 according to an embodiment of the present invention;
Fig. 10 is a front view of an optical member of Example 9 according to an embodiment of the present invention;
Fig. 11 is a sectional view of the optical member of Example 9 according to an embodiment of the present invention;
Fig. 12 is a sectional view of an optical system of Example 10 according to an embodiment of the present invention;
Fig. 13 is a sectional view of an optical system of Example 11 according to an embodiment of the present invention;
Fig. 14 is a sectional view of an optical system of Example 12 according to an embodiment of the present invention; and
Fig 15 is a sectional view of an optical system of Example 13 according to an embodiment of the present invention.

Further, an embodiment of an optical member of the present invention is produced by providing the aforementioned film and transparent antireflection film on a base material, and the thin film layer is provided on a surface of the base material.

An embodiment of a thin film layer of the film of the present invention contains at least one selected from the group consisting of zirconia, silica, titania, and zinc oxide, and develops an effect of suppressing light scattering at an interface between the film and the base material. To be specific, a transparent thin film layer, which provides a refractive index between the refractive index of the fine irregularities and the refractive index of the base material by controlling a content of the component in the transparent thin film layer, is selected. Further, fine irregularities mainly composed of alumina may be formed on the surface of the thin film layer, to thereby reduce light scattering at an interface between the film and air.

The fine irregularities mainly composed of alumina are formed of plate crystals mainly composed aluminum oxide, aluminum hydroxide, or hydrates thereof. An example of particularly preferable crystals is boehmite. A plate structure of the plate crystals is preferably arranged selectively in a vertical direction to the surface of the thin film layer.

A height of the fine irregularities is preferably 0.005 $\mu$m to 5.0 $\mu$m, more preferably 0.01 $\mu$m to 2.0 $\mu$m. The term "height of surface irregularities" as used herein refers to a difference in elevation between a top of a convex portion and a bottom of a concave portion formed on a coating film surface. That is, a height of surface irregularities of a coating film of 0.005 $\mu$m to 5.0 $\mu$m refers to a difference in elevation between a peak and a valley bottom defined in "definition and representation of surface roughness" of JIS B 0601, which corresponds to a maximum surface roughness (Rmax). A height of irregularities of 0.005 $\mu$m to 5.0 $\mu$m provides effective antireflection performance of the fine irregular structure, prevents degradation of mechanical strength of the irregularities, and results in advantageous production cost of the fine irregular structure.

A surface density of the fine irregularities of embodiments of the present invention is also important. An average surface roughness Ra' corresponding to the surface density and obtained by extending a center line average roughness areally is 5 nm or more, more preferably 10 nm or more, furthermore preferably 15 nm or more and 100 nm or less. A surface area ratio Sr is 1.1 or more, more preferably 1.15 or more, and furthermore preferably 1.2 or more and 5.0 and less.

An example of a method of evaluating the thus-obtained fine irregular structure includes observation of the fine irregular structure surface by a scanning probe microscope. An average surface roughness Ra' obtained by extending a center line average roughness Ra of the film areally and a surface area ratio Sr can be determined through the observation. That is, the average surface roughness Ra' (nm) is a value obtained by applying the center line average roughness Ra defined by JIS B 0601 to a measuring surface and extending three-dimensionally. The average surface roughness Ra' is expressed as "an average value of absolute values of deviation from a reference surface to a specified surface", and is represented by the following equation.

(Equation 1)

$$Ra' = \frac{1}{S_0} \int_{Y_B}^{Y_T} \int_{X_L}^{X_R} |F(X,Y) - Z_0| d_X d_Y \qquad (1)$$

Ra': average surface roughness (nm)
$S_0$: area of ideally flat measuring surface, $|X_R - x_L| \times |Y_T - Y_B|$
F(X, Y): height at point of measurement (X, Y), X represents X-axis, Y represents Y-axis
$X_L$ to $X_R$: range of X-axis on measuring surface
$Y_B$ to $Y_T$: range of Y-axis on measuring surface
$Z_0$: average height within measuring surface

The surface area ratio Sr is obtained by Sr=S/$S_0$ ($S_0$ represents an area of an ideally flat measuring surface, and S represents a surface area of an actual measuring surface). The surface area of the actual measuring surface is determined as follows. First, the measuring surface is divided into very small triangles consisting of three closest points of data (A, B, C). Then, an area $\Delta S$ of each small triangle is determined by using a vector product: $[\Delta S(\Delta ABC)]^2 = [S(S-AB)(S-BC)(S-CA)]$ (where, AB, BC, and CA are each a length of each side, and $2S = AB + BC + CA$). A sum of $\Delta S$'s provides the surface area S.

The film having Ra' of 5 nm or more and Sr of 1.1 or more prevents degradation of antireflection performance for the aforementioned reasons.

Embodiments of the film and the antireflection film can be formed through a known vapor phase deposition such as CVD or PVD and a known liquid phase process such as a sol-gel method. A transparent layer may be formed through such techniques in advance, and then plate crystals mainly composed of alumina may be provided. Alternatively, at least one oxide layer containing alumina and any one of zirconia, silica, titania, and zinc oxide may be formed, and then plate crystals of alumina may be provided by selectively dissolving the surface of the layer or precipitating the plate crystals thereon. Of those, a preferable method of growing alumina plate crystals involves: forming a gel film by applying a sol-gel coating liquid containing alumina; and subjecting the gel film to warm water treatment.

At least one compound selected from the group consisting of a zirconium compound, a silicon compound, a titanium compound, and a zinc compound, and an aluminum compound are used as raw materials for the gel film. Corresponding metal alkoxides or salt compounds such as chlorides and nitrates can be used as raw materials for zirconia, silica, titania, zinc oxide, and alumina. Corresponding metal alkoxides are particularly preferably used as raw materials for zirconia, silica, and titania from the viewpoint of film forming properties.

Specific examples of zirconium alkoxide include zirconium tetramethoxide, zirconium tetraethoxide, zirconium tetra-n-propoxide, zirconium tetraisopropoxide, zirconium tetra-n-butoxide, and zirconium tetra-t-butoxide.

Examples of silicon alkoxide include various compounds represented by the general formula $Si(OR)_4$, where each R represents the same or different lower alkyl group such as a methyl group, an ethyl group, a propyl group, an isopropyl group, a butyl group; or an isobutyl group.

Examples of titanium alkoxide include tetramethoxytitanium, tetraethoxytitanium, tetra-n-propoxytitanium, tetraisopropoxytitanium, tetra-n-butoxytitanium, and tetraisobutoxytitanium.

Examples of the zinc compound include zinc acetate, zinc chloride, zinc nitrate, zinc stearate, zinc oleate, and zinc salicylate. Particularly preferable examples thereof include zinc acetate and zinc chloride.

Examples of the aluminum compound include aluminum ethoxide, aluminum isopropoxide, aluminum n-butoxide, aluminum sec-butoxide, aluminum tert-butoxide, aluminum acetylacetonate, oligomers thereof, aluminum nitrate, aluminum chloride, aluminum acetate, aluminum phosphate, aluminum sulfate, and aluminum hydroxide.

In embodiments of the present invention, it is preferable that 0.01 to 15,000 parts by weight, preferably 0.05 to 10,000 parts by weight, more preferably 0.1 to 5,000 parts by weight of the at least one compound selected from the group consisting of a zirconium compound, a silicon compound, a titanium compound, and a zinc compound to the aluminum compound with respect to 100 parts by weight of the aluminum compound. Excellent antireflection performance cannot be expected with a ratio of less than 0.01 part by weight, and fine irregularities may not be formed on a film surface with a ratio exceeding 15,000 parts by weight.

The zirconium, silicon, titanium, zinc, or aluminum compound is dissolved in an organic solvent to prepare a solution of the zirconium, silicon, titanium, zinc, or aluminum compound. An amount of the organic solvent added to the zirconium, silicon, titanium, zinc, or aluminum compound is preferably about 20 in molar ratio with respect to the compound.

In the present specification, the phrase "an amount of A added is about 20 in molar ratio with respect to B" indicates that moles of A added is 20 times moles of B.

Examples of the organic solvent include:

alcohols such as methanol, ethanol, 2-propanol, butanol, ethylene glycol, and ethylene glycol mono-n-propyl ether; various aliphatic or alicyclic hydrocarbons such as n-hexane, n-octane, cylohexane, cyclopentane, and cyclooctane; various aromatic hydrocarbons such as toluene, xylene, and ethylbenzene; various esters such as ethyl formate, ethyl acetate, n-butyl acetate, ethylene glycol monomethyl ether acetate, ethylene glycol monoethyl ether acetate, and ethylene glycol monobutyl ether acetate; various ketones such as acetone, methyl ethyl ketone, methyl isobutyl ketone, and cyclohexanone; various ethers such as dimethoxyethane, tetrahydrofuran, dioxane, and diisopropyl ether; various chlorinated hydrocarbons such as chloroform, methylene chloride, carbon tetrachloride, and tetrachloroethane; and aprotic polar solvents such as N-methyl pyrrolidone, dimethylformamide, dimethylacetamide, and ethylene carbonate. Of the aforementioned various solvents, alcohols are preferably used for preparation of an application solution used in the present invention from the viewpoint of stability of the solution.

Alkoxide raw materials, particularly alkoxides of zirconium, titanium, and aluminum are highly reactive to water and are rapidly hydrolyzed by moisture in air or addition of water, which causes clouding and precipitation of the solution.

Further, the zinc compound hardly dissolves in an organic solvent alone or provides an unstable solution.

In order to address such problems, a stabilizer is preferably added for stabilization of the solution. Examples of the stabilizer include β-diketone compounds such as acetylacetone, dipivaloylmethane, trifluoroacetylacetone, hexafluoroacetylacetone, benzoylacetone, and benzoylmethane; β-ketoester compounds such as methyl acetoacetate, ethyl acetoacetate, allyl acetoacetate, benzyl acetoacetate, isopropyl acetoacetate, tert-butyl acetoacetate, isobutyl acetoacetate, 2-methoxyethyl acetoacetate, and 3-keto-n-methylvalerate; and alkanolamines such as monoethanolamine, diethanolamine, and triethanolamine. The stabilizer is preferably added in an amount of about 1 in molar ratio with respect to alkoxide.

For example, preparation of an alumina multicomponent application liquid containing silicon alkoxide preferably involves: addition of water or a catalyst to a silicon alkoxide solution in advance for partial hydrolysis of an alkoxyl group; and mixing of the solution containing silicon alkoxide and a solution containing an aluminum compound. Preparation of an alumina multicomponent application liquid containing zirconium alkoxide, titanium alkoxide, or a zinc compound preferably involves: mixing of a solution containing zirconium alkoxide, titanium alkoxide, or a zinc compound and a solution containing an aluminum compound; and addition of water or a catalyst to the mixture.

Examples of the catalyst include nitric acid, hydrochloric acid, sulfuric acid, phosphoric acid, acetic acid, and ammonia.

Further, a water-soluble organic polymer can be added as required. The organic polymer easily elutes from a gel film through immersion of the gel film in warm water, to thereby increase a reaction surface area with the warm water and allow formation of a fine irregular structure at low temperatures and in a short period of time. Further, a type or molecular weight of the organic polymer to be added may be changed to allow control of a shape of the fine irregular structure to be formed. Preferable examples of the organic polymer include polyether glycols such as polyethylene glycol and polypropylene glycol for easy elution thereof from the gel film through immersion of the gel film in warm water. Polyether glycols are preferably added in a range of 0.1 to 10 in weight ratio with respect to the weight of oxides in the film.

In formation of a thin film using an application solution containing no stabilizers, an atmosphere for application is preferably an inert gas atmosphere such as dry air or dry nitrogen. A relative humidity of the dry atmosphere is preferably 30% or less.

Examples of a method of applying a solution for forming a thin film that can be employed include known application means such as a dipping method, a spin coating method, a spray method, a printing method, a flow coating method, and a combination thereof. A film thickness can be controlled by changing a lifting speed in a dipping method, a substrate rotational speed in a spin coating method, and a concentration of the application solution. Of those methods, the lifting speed in the dipping method can be selected depending on a required film thickness, and is preferably a moderate, constant speed of about 0.1 mm/s to 3.0 mm/s after immersion.

The alumina multicomponent gel film prepared through the aforementioned technique only needs to be dried at room temperature for about 30 minutes. Further, the gel film can be dried or subjected to heat treatment at higher temperatures as required. A higher heat treatment temperature can form a more stable irregular structure.

Next, the alumina multicomponent gel film is subjected to immersion treatment in warm water to form alumina fine irregularities. A surface layer of the alumina multicomponent gel film receives a deflocculation action or the like through immersion of the gel film in warm water, and the components of the gel film partially elute. Plate crystals mainly composed of alumina precipitate and grow on the surface layer of the gel film due to a difference in solubilities of various hydroxides in warm water. The warm water preferably has a temperature of 40°C to 100°C. The warm water treatment time period is about 5 minutes to 24 hours. In such warm water treatment of the alumina multicomponent gel film, crystallization takes place from a difference in solubilities of the respective components in warm water. Thus, the warm water treatment of the alumina multicomponent gel film differs from that of the alumina single component film, and the size of the plate crystals can be controlled in a wide range by changing a composition of inorganic components. As a result, the fine irregularities formed from the plate crystals can be controlled in the aforementioned wide range. The use of zinc oxide as an accessory component allows eutecoid with alumina. The plate crystals may contain a zinc oxide component, to thereby allow control of a refraction index of the fine irregularities formed from the plate crystals and realize excellent antireflection performance.

In the embodiments of the film and the transparent antireflection film, a content of zirconia, silica, titania, or zinc oxide in the transparent thin film layer of the film is preferably 0.01 or more and less than 1.0, more preferably 0.005 or more and 0.8 or less in weight ratio with respect to the weight of the film. A content of zirconia, silica, titania, or zinc oxide of 0.001 or more and less than 1.0 in weight ratio changes the size and intercrystalline distance of the plate crystals mainly composed of alumina on the surface, to thereby allow control of the height of the fine irregular structure or the average surface roughness Ra' within the aforementioned range. A content of zirconia, silica, titania, or zinc oxide may be changed to adjust a refractive index of the film between the refractive index of the base material to be used and the refractive index of the fine irregularities mainly composed of alumina. As a result, the refractive index of the film is consistent with the refractive index of the base material, and reflection at an interface between the film and the base material can be reduced to minimum.

Embodiments of the film and the transparent antireflection filmeach desirably have a film thickness of 0.01 $\mu$m to 10 $\mu$m, preferably 0.1 $\mu$m to 3 $\mu$m. The term "film thickness" refers to a thickness of a thin film layer supporting fine irregularities containing the fine irregularities mainly composed of alumina of the present invention.

Examples of the base material used for the optical member of embodiments of the present invention include glass, a plastic substrate, a glass mirror, and a plastic mirror. Typical examples of the plastic substrate include: films or molded products of thermoplastic resins such as polyester, triacetyl cellulose, cellulose acetate, polyethylene terephthalate, polypropylene, polystyrene, polycarbonate, polymethyl methacrylate, an ABS resin, polyphenylene oxide, polyurethane, polyethylene, and polyvinyl chloride; and crosslinked films or crosslinked products obtained from various thermosetting resins such an unsaturated polyester resin, a phenol resin, crosslinked polyurethane, a crosslinked acrylate resin, and a crosslinked saturated polyester resin. Specific examples of glass include no alkali glass, aluminosilicate glass, and borosilicate glass.

The transparent base material used in embodiments of the present invention may be any base material which may be finally formed into a shape according to an intended use. A flat plate, a film, a sheet, or the like is used as the transparent base material, and the base material may have a two-dimensional or three-dimensional curved surface. A thickness of the base material may be determined arbitrarily. The base material generally has a thickness of 5 mm or less, but is not limited thereto.

The antireflection film according to embodiments of the present invention may be further provided with a layer for imparting various functions, in addition to the layer described above. For example, the antireflection film may be provided with a hard coat layer for improving a film strength, or an adhesive layer or primer layer for improving adhesion between the transparent base material and the hard coat layer. The refractive index of each of the other layers provided between the transparent base material and the hard coat layer is preferably between the refractive index of the transparent base material film and the refractive index of the hard coat layer.

Hereinafter, embodiments of the present invention will be described in detail by examples. However, the present invention is not limited thereto.

Transparent films each having fine irregularities on a surface obtained in the following Examples and Comparative Examples were evaluated through the following methods.

(1) Coating film shape observation

Photographic observation (accelerating voltage: 10.0 kV, magnification: 30,000) was conducted on a surface of a surface layer of a coating film using a scanning electron microscope (FE-SEM, S4500, manufactured by Hitachi, Ltd.).

An average surface roughness Ra' obtained by extending areally a center line average roughness defined by JIS B 0601 and a surface area ratio Sr were determined using a scanning probe microscope (SPM, SPI-3800, DFM mode, manufactured by Seiko Instruments & Electronics Ltd.).

(2) Surface composition analysis

Photographic observation (accelerating voltage: 200 kV, magnification: 41,000 $\times$ 5.0) was conducted on a cross section of the coating film using a high resolution transmission electron microscope (HRTEM, H-9000NAR, manufactured by Hitachi, Ltd.). Then, an EDX analysis (energy resolution: 137 eV, accelerating voltage: 200 kV, beam diameter: about 1 nm$\Phi$) was conducted at an arbitrary position using an elemental analyzer (VOYAGER III M3100, manufactured by NORAN).

(3) Transmittance/reflectance measurement

An automatic optical element measurement device (ART-25GD, manufactured by JASCO Corporation) was used. A disc glass plate was used. Incident angles of light for transmittance and reflectance measurement were 0° and 10°, respectively.

(Example 1)

A clear float glass substrate (soda lime silicate-based composition) of a size of 100 mm $\times$ 100 mm and a thickness of about 2 mm was subjected to ultrasonic cleaning with isopropyl alcohol and was dried; to thereby prepare a glass substrate for coating.

Aluminum sec-butoxide (Al(O-sec-Bu)$_3$) was dissolved in 2-propanol (IPA), and ethyl acetoacetate (EAcAc) was added thereto as a stabilizer. The mixture was stirred at room temperature for about 3 hours, to thereby prepare an Al$_2$O$_3$ sol solution. A molar ratio of the solution was Al(O-sec-Bu)$_3$ : IPA : EAcAc = 1 : 20 : 1.

Meanwhile, zirconium isopropoxide (Zr(O-iso-Pr)$_4$) was also dissolved in IPA, and EAcAc was added thereto.

The mixture was stirred at room temperature for about 3 hours, to thereby prepare a $ZrO_2$ sol solution. The molar ratio of the solution was Zr(O-iso-Pr)$_4$ : IPA : EAcAc = 1 : 20 : 1.

The $ZrO_2$ sol solution was added into the $Al_2O_3$ sol solution in a weight ratio of $Al_2O_3$: $ZrO_2$ = 0.7: 0.3. The mixture was stirred for about 30 minutes, and 0.01 M of diluted hydrochloric acid (HCl aq.) was added thereto. The whole was stirred at room temperature for about 3 hours, to thereby prepare an $Al_2O_3$-$ZrO_2$ sol as an application liquid. An amount of HCl aq. added was a sum of twice moles of Al(O-sec-Bu)$_3$ and twice moles of Zr(O-iso-Pr)$_4$.

Next, the glass substrate for coating was immersed in the application liquid, and then an coating film was formed on a surface of the glass substrate through a dipping method (lifting speed of 3 mm/s, 20°C, 56% R.H.). The resultant was dried and then subjected to heat treatment at 100°C for 1 hour, to thereby obtain a transparent, amorphous $Al_2O_3$/$ZrO_2$-based gel film. Next, the gel film was immersed in hot water at 100°C for 30 minutes and then dried at 100°C for 10 minutes.

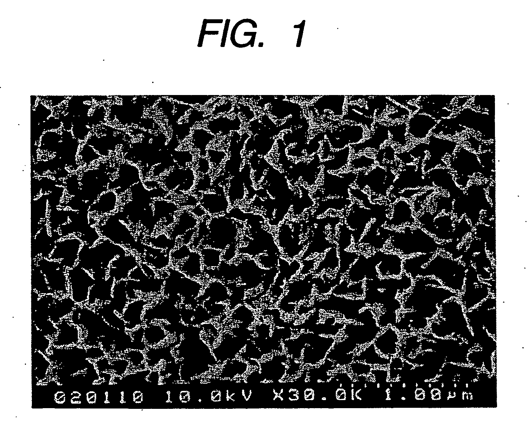

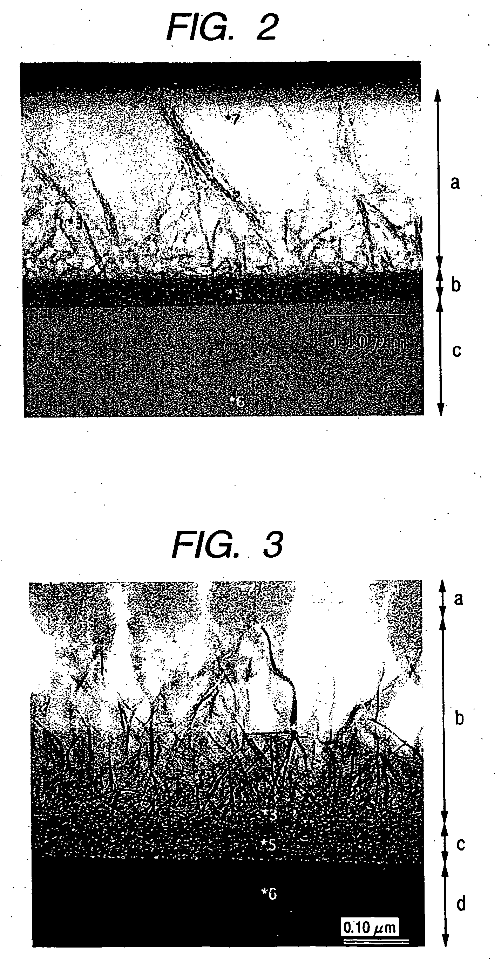

Scanning electron microscope (FE-SEM) observation and scanning probe microscope (SPM) observation were conducted on the surface of the obtained film. Fig. 1 shows an FE-SEM image. The substrate was cut out using a dicing saw and was then subjected to cross-wise lamination through a focus ion beam (FIB) method, for composition analysis of fine irregular portions through cross-section TEM observation and EDX measurement. Fig. 2 shows the results of the cross-section TEM observation.

Fig. 1 is a photograph showing a result of the FE-SEM observation of the film of Example 1 formed on a glass substrate and having fine irregularities on the surface from above (magnification of 30,000). Fig. 2 is a photograph showing a result of the cross-section TEM observation of the film of Example 1 formed on a glass substrate and having fine irregularities on the surface (magnification of about 200,000). In Figs. 1 and 2, symbol a represents fine irregularities mainly composed of alumina according to the present invention, symbol b represents a thin film layer supporting the fine irregularities, and symbol c represents a substrate.

The FE-SEM image of Fig. 1 reveals that fine irregularities composed of plate crystals were formed on an amorphous composite film surface layer. Fine irregularities of a similar scale were also observed in the SPM image. The average surface roughness Ra' (nm) and surface area ratio Sr of the fine irregular surface were Ra' = 40 nm and Sr = 2.4, respectively. The cross-section TEM image of Fig. 2 reveals that a fine irregular structure having a height of about 0.2 $\mu$m and composed of plate crystals were formed on a rather blackish layer of the glass substrate. The height of the fine irregularities was about 0.2 $\mu$m, and a thickness of the film was about 250 nm.

The results of the EDX analysis at each position in Fig. 2 indicate that peaks derived from alumina were observed and substantially no peaks derived from zirconia were observed in *1, *2, *3, *4, and *7, positions in the fine irregularities and that peaks derived from both components of alumina and zirconia were observed in *5 position in the blackish layer. Meanwhile, substantially no peaks derived from both the components of alumina and zirconia were observed in *6 position in the glass substrate.

The results revealed that an amorphous composite film composed of zirconia and alumina was formed on the glass substrate and that fine irregularities of plate crystals mainly composed of alumina were formed on the film surface layer.

Table 1 shows a relationship between the average surface roughness Ra' of the thin film and the film transmittance/reflectance. Table 1 further shows the results of the glass substrate alone having no film coated thereon as Reference Example 1.

(Example 2)

The $Al_2O_3$ sol was prepared in the same manner as that in Example 1.

Meanwhile, tetraethoxysilane (TEOS), IPA, and 0.01 M (HCl aq.) were mixed, and the whole was stirred at room temperature for about 3 hours, to thereby prepare an $SiO_2$ sol solution. A molar ratio of the solution was TEOS : IPA = 1 : 20. An amount of HCl aq. added was a sum of equal moles of Al (O-sec-Bu)$_3$ and twice moles of TEOS. The $SiO_2$ sol solution was added into the $Al_2O_3$ sol solution in a weight ratio of $Al_2O_3$ : $SiO_2$ = 0.7 : 0.3, to thereby prepare an $Al_2O_3$-$SiO_2$ sol as an application liquid.

Next, the same glass substrate subjected to the same cleaning treatment as that of Example 1 was immersed in the application liquid, and then an coating film was formed on the surface of the glass substrate through a dipping method (lifting speed of 3 mm/s, 20°C, 56% R.H.). The resultant was dried and then subjected to heat treatment at 100°C for 1 hour, to thereby obtain a transparent, amorphous $Al_2O_3$/$SiO_2$-based gel film. Next, the gel film was immersed in hot water at 100°C for 30 minutes and then dried at 100°C for 10 minutes.

The FE-SEM observation and SPM observation were conducted on the surface of the obtained film, and fine irregularities of plate crystals, similar to those of Example 1, were observed. The average surface roughness Ra' (nm) and surface area ratio Sr obtained through the SPM measurement were Ra' = 50 nm and Sr = 2.5, respectively. The results of the cross-section TEM observation and EDX measurement revealed that an amorphous composite film composed of silica and alumina was formed on the glass substrate, and that fine irregularities of plate crystals mainly composed of alumina were formed on the composite film.

Table 1 shows the relationship between the average surface roughness Ra' and the film transmittance/reflectance.

(Example 3)

The $SiO_2$ sol solution used in Example 2 was added into the $Al_2O_3$ sol solution used in Example 1 in a weight ratio of $Al_2O_3$ : $SiO_2$ = 0.5 : 0.5, to thereby prepare an $Al_2O_3$-$SiO_2$ sol as an application liquid.

Next, FE-SEM observation and SPM observation were conducted on the surface of the film formed, subjected to hot water treatment, and dried under the same conditions as those of Example 2, and fine irregularities of plate crystals mainly composed of alumina, similar to those of Example 1, were observed. The average surface roughness Ra' (nm) and surface area ratio Sr obtained through the SPM measurement were Ra' = 75 nm and Sr = 2.7, respectively.

Table 1 shows the relationship between the average surface roughness Ra' and the film transmittance/reflectance.

(Example 4)

The $Al_2O_3$ sol was prepared in the same manner as that in Example 1.

Meanwhile, titanium n-butoxide ($Ti(O-n-Bu)_4$) was also dissolved in IPA, and EAcAc was added thereto. The mixture was stirred at room temperature for about 3 hours, to thereby prepare a $TiO_2$ sol solution. A molar ratio of the solution was $Ti(O-n-Bu)_4$ : IPA : EAcAc = 1 : 20 : 1.

The $TiO_2$ sol solution was added into the $Al_2O_3$ sol solution in a weight ratio of $Al_2O_3$ : $TiO_2$ = 0.7 : 0.3. The mixture was stirred for about 30 minutes, and 0.01 M (HCl aq.) was added thereto. The whole was stirred at room temperature for about 3 hours, to thereby prepare an $Al_2O_3$-$TiO_2$ sol as an application liquid. An amount of HCl aq. added was a sum of twice moles of $Al(O-sec-Bu)_3$ and twice moles of $Ti(O-n-Bu)_4$.

Next, the same glass substrate subjected to the same cleaning treatment as that in Example 1 was immersed in the application liquid, and then an coating film was formed on a surface of the glass substrate through a dipping method (lifting speed of 3 mm/s, 20°C, 56% R.H.). The resultant was dried and then subjected to heat treatment at 100°C for 1 hour, to thereby obtain a transparent, amorphous $Al_2O_3/TiO_2$-based gel film. Next, the gel film was immersed in hot water at 100°C for 30 minutes and then dried at 100°C for 10 minutes.

The FE-SEM observation and SPM observation were conducted on the surface of the obtained film, fine irregularities of plate crystals, similar to those of Example 1, were observed. The average surface roughness Ra' (nm) and surface area ratio Sr obtained through the SPM measurement were Ra' = 48 nm and Sr = 2.5, respectively. The results of the cross-section TEM observation and EDX measurement revealed that an amorphous composite film composed of titania and alumina was formed on the glass substrate and that plate crystals mainly composed of alumina were formed on the amorphous composite film.

Table 1 shows the relationship between the average surface roughness Ra' and the film transmittance/reflectance.

(Example 5)

The $Al_2O_3$ sol was prepared in the same manner as that in Example 1. Meanwhile, zinc acetate dihydrate ($Zn(CH_3COO)_2 \cdot 2H_2O$) was also dissolved in (IPA), and monoethanolamine (MEA) was added thereto. The mixture was stirred at room temperature for about 3 hours, to thereby prepare a ZnO solution. A molar ratio of the solution was $Zn(CH_3COO)_2 \cdot 2H_2O$ : IPA : MEA = 1 : 10 : 1. The ZnO sol solution was added into the $Al_2O_3$ sol solution in a weight ratio of $Al_2O_3$ : ZnO = 0.9 : 0.1, and the whole was stirred at room temperature for about 3 hours, to thereby prepare an $Al_2O_3$-ZnO sol as an application liquid.

Next, the same glass substrate subjected to the same cleaning treatment as that in Example 1 was immersed in the application liquid, and then an coating film was formed on a surface of the glass substrate through a dipping method (lifting speed of 2 mm/s, 20°C, 56% R.H.). The resultant was dried and then subjected to heat treatment at 400°C for 0.5 hour, to thereby obtain a transparent, amorphous $Al_2O_3/ZnO$-based gel film. Next, the gel film was immersed in hot water at 100°C for 30 minutes and then dried at 100°C for 10 minutes.

FE-SEM observation and SPM observation were conducted on the surface of the obtained film, and fine irregularities of plate crystals, similar to those of Example 1, were observed. The average surface roughness Ra' (nm) and surface area ratio Sr obtained through the SPM measurement were Ra' = 32 nm and Sr = 2.1, respectively. The glass substrate was cut out using a dicing saw in the same manner as that in Example 1 and was then subjected to crosswise lamination through an FIB method, for composition analysis of fine irregular portions through cross-section TEM observation and EDX measurement. Fig. 3 shows the results of the cross-section TEM observation. In Fig. 3, symbol a represents a carbon film used during the TEM observation, symbol b represents fine irregularities mainly composed of alumina according to embodiments of the present invention, symbol c represents a thin film layer supporting the fine irregularities, and symbol d represents a substrate.

The cross-section TEM image of Fig. 3 reveals that a fine irregular structure having a height of about 0.3 $\mu$m and composed of plate crystals were formed on a rather blackish layer on the glass substrate. The results of the EDX analysis at each position in Fig. 3 indicate that not only peaks derived from alumina but also small peaks derived from zinc oxide were clearly observed in *1, *2, *3, and *4 positions in the fine irregularities, and that peaks derived from both components of alumina and zinc oxide were observed in *5 position in the blackish layer. Meanwhile, peaks derived from the zinc component partially included in the substrate were observed in *6 position in the glass substrate, but no peaks derived from the alumina component were observed therein. No peaks of both the components of alumina and zinc oxide were observed in *7 position in the carbon film used during preparation of a TEM sample. The results revealed that an amorphous composite film composed of zinc oxide and alumina was formed on the glass substrate, and that fine irregularities of plate crystals mainly composed of alumina and containing zinc oxide were formed on the film surface layer.

Table 1 shows the relationship between the average surface roughness, Ra' of the thin film and the film transmittance/reflectance.

(Comparative Example 1)

Al(O-sec-Bu)$_3$ was dissolved in IPA, and EAcAc was added thereto as a stabilizer. The mixture was stirred at room temperature for about 3 hours, and 0.01 M of diluted hydrochloric acid (HCl aq.) was added thereto. The whole was stirred at room temperature for about 3 hours, to thereby prepare an Al$_2$O$_3$ sol solution. A molar ratio of the solution was Al(O-sec-Bu)$_3$ : IPA : EAcAc : HCl aq. = 1 : 20 : 1 : 1.

Next, the same glass substrate subjected to the same cleaning treatment as that in Example 1 was immersed in the application liquid, and then an coating film was formed on a surface of the glass substrate through a dipping method (lifting speed of 3 mm/s, 20°C, 56% R.H.). The resultant was dried and then subjected to heat treatment at 100°C for 1 hour for calcination, to thereby coat a transparent, amorphous Al$_2$O$_3$ film. Next, the film was immersed in hot water at 100°C for 30 minutes and then dried at 100°C for 10 minutes.

FE-SEM observation and SPM observation were conducted on the surface of the obtained film, and a random and complicate fine irregular structure was observed. The average surface roughness Ra' (nm) and surface area ratio Sr obtained through the SPM measurement were Ra' = 26 nm and Sr = 1.7, respectively.

Table 1 shows the relationship between the average surface roughness Ra' of the transparent alumina thin film and the film transmittance/reflectance.

Table 1

| | Average surface roughness Ra'(nm) | Surface area ratio Sr | Transmittance (%) | Single layer film transmittance (%) | Reflectance (%) |
|---|---|---|---|---|---|
| Example 1 | 40 | 2.4 | 97.2 | 2.60 | 0.94 |
| Example 2 | 50 | 2.5 | 97.4 | 2.70 | 0.92 |
| Example 3 | 75 | 2.7 | 96.2 | 2.10 | 1.66 |
| Example 4 | 48 | 2.5 | 97.1 | 2.55 | 1.10 |
| Example 5 | 32 | 2.1 | 99.3 | 3.65 | 0.50 |
| Comparative Example 1 | 26 | 1.7 | 95.9 | 1.95 | 2.10 |
| Ref. Example 1 | 0(ref.) | - | 92.0 | - | 8.82 |

Note: The term "transmittance" refers to a transmittance of the glass substrate on which a film having fine irregularities was formed on the surface of each side. The term "single layer film transmittance" refers to a transmittance of a film formed on one side of the glass substrate, and is 1/2 of the difference obtained by subtracting the transmittance of Reference Example 1 from the transmittance of each Example.

(Example 6)

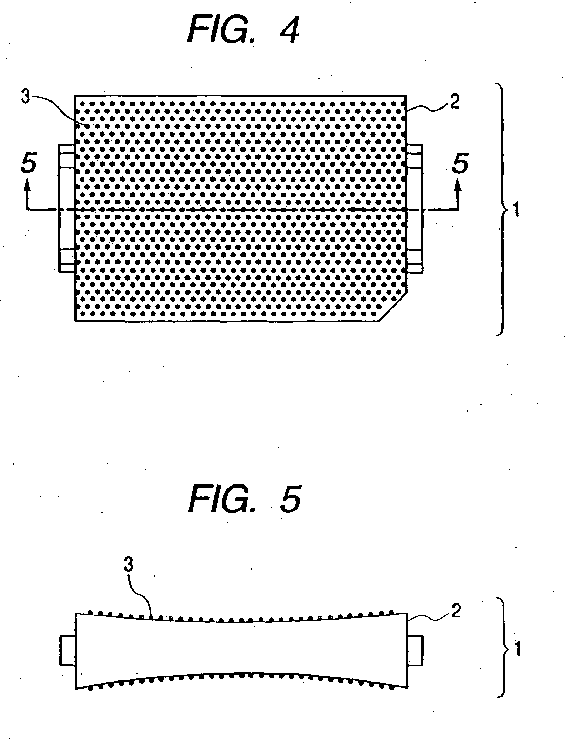

Fig. 4 is a front view of an optical member of Example 6 according to an embodiment of the present invention. In Fig. 4, an optical member 1 is a concave lens and has a structure in which a transparent antireflection film 3 is provided on a substrate 2. Hereinafter, the same symbols in other figures as those in Fig. 4 represent the same members.

Fig. 5 is a sectional view of the optical member of Example 6 taken along the line 5-5 of Fig. 4. The transparent antireflection film 3 having an average surface roughness Ra' of 5 nm or more and a surface area ratio Sr of 1.1 or more, and having a fine irregular structure mainly composed of alumina and containing at least one accessory component selected from the group consisting of zirconia, silica, titania, and zinc oxide was formed on each optical surface. Thus, the optical surfaces exhibit reduced light reflectance.

Example 6 describes the case of a concave lens. However, the present invention is not limited thereto, and the lens may be a convex lens or a meniscus lens.

(Example 7)

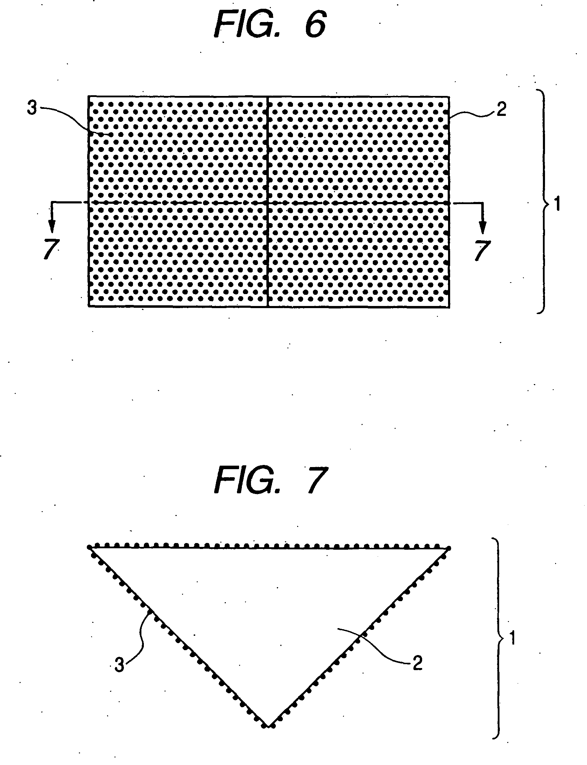

Fig.6 is a front view of an optical member of Example 7 according to an embodiment of the present invention. In Fig. 6, the optical member 1 is a prism and has a structure in which the transparent antireflection film 3 is provided on the substrate 2.

Fig. 7 is a sectional view of the optical member of Example 7 taken along the line 7-7 of Fig. 6. The transparent antireflection film 3 having an average surface roughness Ra' of 5 nm or more and a surface area ratio Sr of 1.1 or more, and having a fine irregular structure mainly composed of alumina and containing at least one accessory component selected from the group consisting of zirconia, silica, titania, and zinc oxide was formed on each optical surface. Thus, the optical surfaces exhibit reduced light reflectance.

Example 7 describes the case of a prism having optical surfaces of 90° and 45°. However, the present invention is not limited thereto, and the prism may have optical surfaces of any angles.

(Example 8)

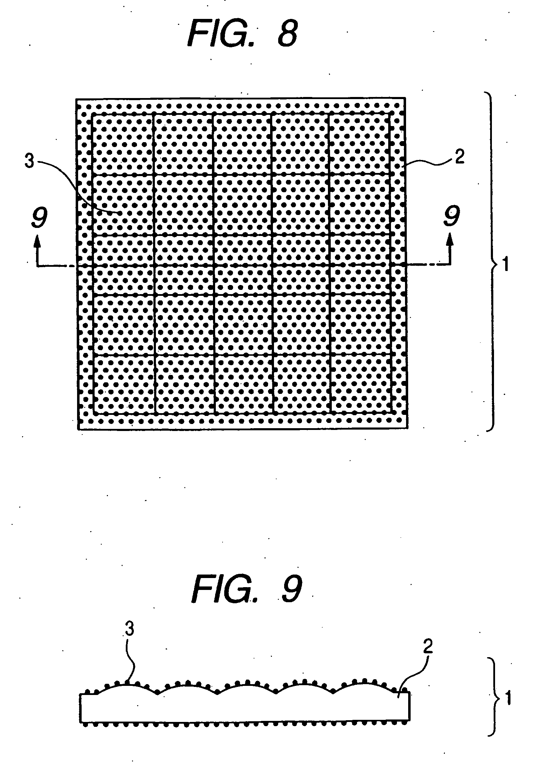

Fig. 8 is a front view of an optical member of Example 8 according to an embodiment of the present invention. In Fig. 8, the optical member 1 is a fly-eye integrator and has a structure in which the transparent antireflection film 3 is provided on the substrate 2.

Fig. 9 is a sectional view of the optical member of Example 8 taken along the line 9-9 of Fig. 8. The transparent antireflection film 3 having an average surface roughness Ra' of 5 nm or more and a surface area ratio Sr of 1.1 or more, having a fine irregular structure mainly composed of alumina and containing at least one accessory component selected from the group consisting of zirconia, silica, titania, and zinc oxide was formed on each optical surface. Thus, the optical surfaces exhibit reduced light reflectance.

(Example 9)

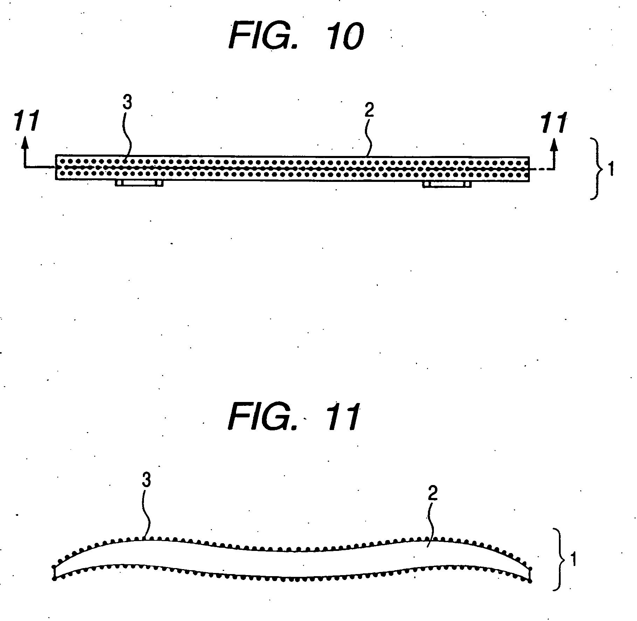

Fig. 10 is a front view of an optical member of Example 9 according to an embodiment of the present invention. In Fig. 10, the optical member 1 is an fθ lens and has a structure in which the transparent antireflection film 3 is provided on the substrate 2.

Fig. 11 is a sectional view of the optical member of Example 9 taken along the line 11-11 of Fig. 10. The transparent antireflection film 3 having an average surface roughness Ra' of 5 nm or more and a surface area ratio Sr of 1.1 or more, and having a fine irregular structure mainly composed of alumina and containing at least one accessory component selected from the group consisting of zirconia, silica, titania, and zinc oxide was formed on each optical surface. Thus, the optical surfaces exhibit reduced light reflectance.

(Example 10)

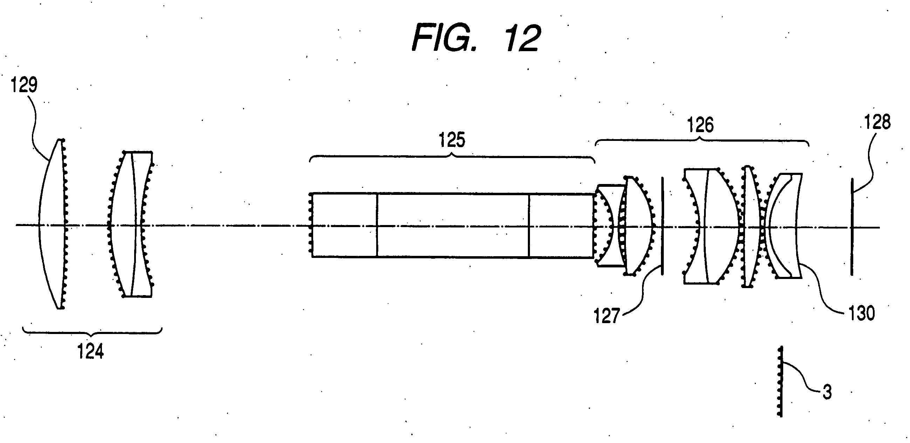

Example 10 describes an example of the use of an optical member of an embodiment of the present invention for an observation optical system. Fig. 12 shows a cross section of an optical system of a pair of optical systems of binoculars.

In Fig. 12, reference numeral 124 collectively represents an objective lens forming an observation image, reference numeral 125 represents a prism (shown developed) for inverting the image, reference numeral 126 collectively represents an ocular lens, reference numeral 127 represents an image forming surface, and reference numeral 128 represents a pupil plane (evaluation plane). In Fig. 12, reference numeral 3 (shown as a legend) represents the transparent antireflection film according to an embodiment of the present invention. The transparent antireflection film 3 having an average surface roughness Ra' of 5 nm or more and a surface area ratio Sr of 1.1 or more, and having a fine irregular structure mainly composed of alumina and containing at least one accessory component selected from the group consisting of zirconia, silica, titania, and zinc oxide was formed on an optical surface. Thus, the optical surface exhibits reduced light reflectance. In Example 10, the transparent antireflection film 3 having a fine irregular structure was not provided on an optical surface 129 of the objective lens closest to an object and an optical surface 130 of the ocular lens closest to the evaluation plane because performance thereof degrades through contact and the like during use. However, the present invention is not limited thereto, and the transparent antireflection film 3 may be provided on the optical surfaces 129 and 130.

(Example 11)

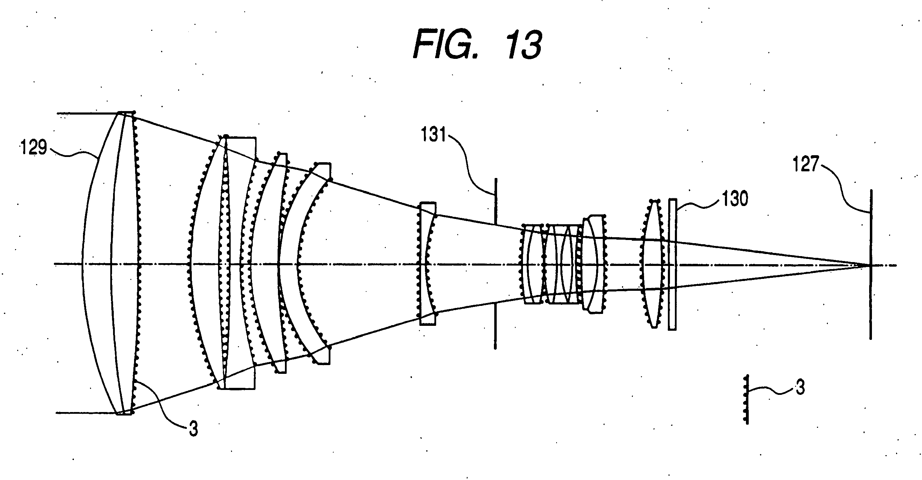

Example 11 describes an example of the use of an optical member of an embodiment of the present invention for an image pickup optical system. Fig. 13 shows a cross section of a shooting lens (telescopic lens) such as a camera.
In Fig. 13, reference numeral 127 represents a film as an image forming surface, or a solid-state image pickup element (photoelectric conversion element) such as a CCD or a CMOS, and reference numeral 131 represents an iris. In Fig. 13, reference numeral 3 (shown as a legend) represents the transparent antireflection film according to an embodiment of the present invention. The transparent antireflection film 3 having an average surface roughness Ra' of 5 nm or more and a surface area ratio Sr of 1.1 or more, and having a fine irregular structure mainly composed of alumina and containing at least one accessory component selected from the group consisting of zirconia, silica, titania, and zinc oxide was formed on an optical surface. Thus, the optical surface exhibits reduced light reflectance. In Example 11, the transparent antireflection film 3 having a fine irregular structure was not provided on the optical surface 129 of the objective lens closest to an object because performance thereof degrades through contact and the like during use. However, the present invention is not limited thereto, and the transparent antireflection film 3 may be provided on the optical surface 129. Reference numeral 130 also represents the optical surface of the ocular lens closest to the evaluation plane as that in Fig. 12.

(Example 12)

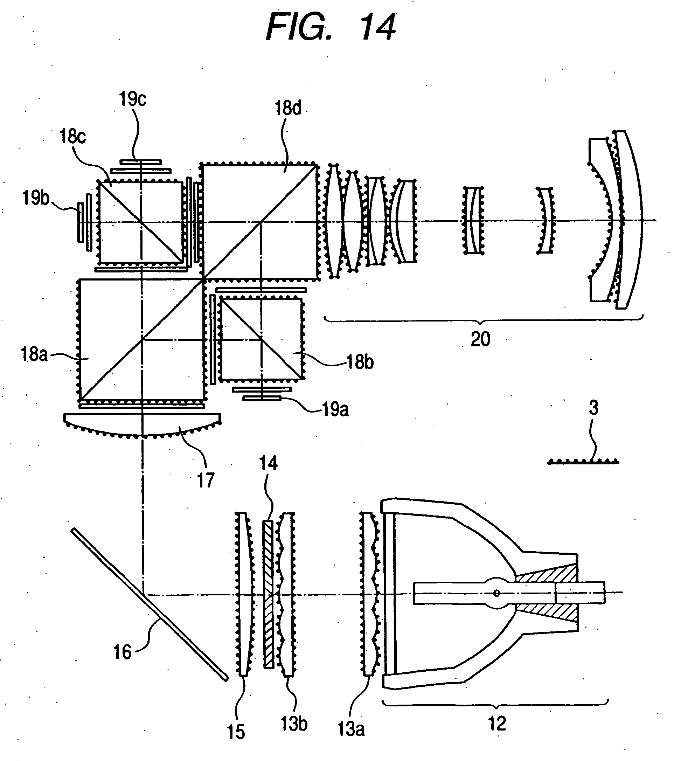

Example 12 describes an example of the use of an optical member of an embodiment of the present invention for a projection optical system (projector). Fig. 14 shows a cross section of a projector optical system.
In Fig. 14, reference numeral 12 represents a light source, reference numerals 13a and 13b each represent a fly-eye integrator, reference numeral 14 represents a polarization conversion element, reference numeral 15 represents a condensing lens, reference numeral 16 represents a mirror, reference numeral 17 represents a field lens, reference numerals 18a, 18b, 18c, and 18d each represent a prism, reference numerals 19a, 19b, and 19c each represent a light modulation element, and reference numeral 20 collectively represents a projection lens. In Fig. 14, reference numeral 3 (shown as a legend) represents the transparent antireflection film according to an embodiment of the present invention. The transparent antireflection film 3 having an average surface roughness Ra' of 5 nm or more and a surface area ratio Sr of 1.1 or more, and having a fine irregular structure mainly composed of alumina and containing at least one accessory component selected from the group consisting of zirconia, silica, titania, and zinc oxide was formed on an optical surface. Thus, the optical surface exhibits reduced light reflectance.
The transparent antireflection film 3 of Example 12 is mainly composed of alumina and contains at least one accessory component selected from the group consisting of zirconia, silica, titania, and zinc oxide. Thus, the transparent antireflection film 3 has high heat resistance and may be used at a position of 13a close to the light source 12 and exposed to high heat without possibility of performance degradation.

(Example 13)

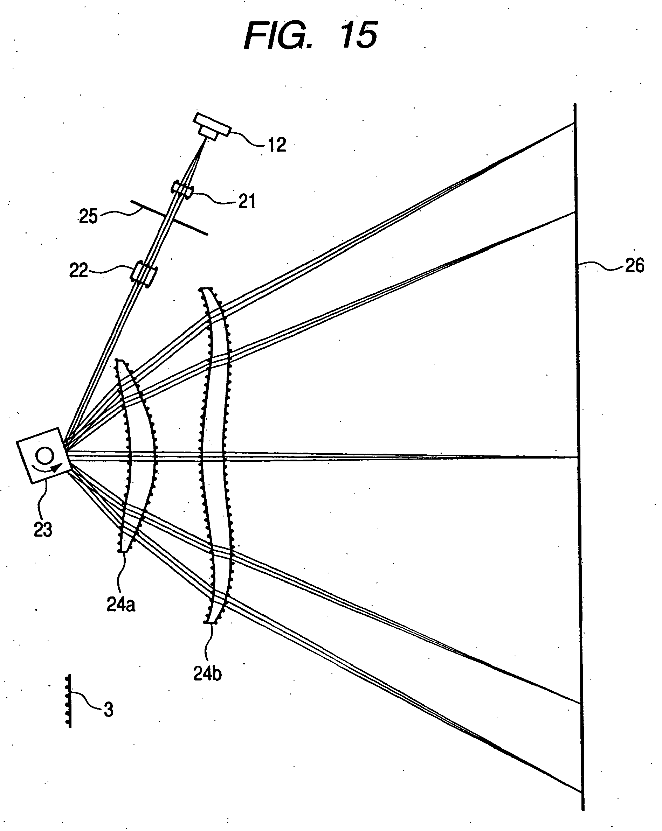

Example 13 describes an example of the use of an optical member of an embodiment of the present invention for a scanning optical system (laser beam printer). Fig. 15 shows a cross section of the scanning optical system.
In Fig. 15, reference numeral 12 represents the light source, reference numeral 21 represents a collimator lens, reference numeral 25 represents an iris, reference numeral 22 represents a cylindrical lens, reference numeral 23 represents a light deflector, reference numerals 24a and 24b each represent an fθ lens, and reference numeral 26 represents an image surface. In Fig. 15, reference numeral 3 (shown as a legend) represents the transparent antireflection film according to an embodiment of the present invention. The transparent antireflection film 3 having an average surface roughness Ra' of 5 nm or more and a surface area ratio of Sr of 1.1 or more, and having a fine irregular structure mainly composed of alumina and containing at least one accessory component selected from the group consisting of zirconia, silica, titania, and zinc oxide was formed on an optical surface. Thus, the optical surface exhibits reduced light reflectance, and high quality image formation is realized.

The film and the transparent antireflection film can be applied to an arbitrary transparent base material, and show an excellent antireflection effect for visible light by reducing reflection at an interface between the base material and the irregularities. Therefore, the film and the transparent antireflection film can be used for optical members including: various displays such as a word processor display, a computer display, a TV display, and a plasma display panel; polarizing plates used for liquid crystal display devices; and sunglass lenses, prescription glass lenses, finder lenses for cameras, prisms, fly-eye lenses, toric lenses, and the like, all made of transparent plastics. Further, the film and the transparent antireflection film can be used for optical members including: various optical lenses employing the aforementioned optical members for an image pickup optical system, an observation optical system such as binoculars, a projection optical system used for a liquid crystal projector or the like, and a scanning optical system used for a laser beam printer or the like; covers for various measuring instruments; and windows of cars, trains, and the like.

**Claims**

1.  An optical member comprising:

    a substrate,
    an antireflection film comprising a thin film layer provided on the substrate and having fine irregularities provided on the thin film layer,
    wherein the thin film layer contains at least one selected from the group consisting of zirconia, silica, titania, and zinc oxide,
    **characterized in that** the fine irregularities are formed of plate crystals mainly composed of alumina and wherein the refractive index between the fine irregular structure and the substrate continously varies.

2.  The optical member according to claim 1, wherein the fine irregularities mainly composed of alumina have a height of 0.005 $\mu$m to 5.0 $\mu$m.

3.  The optical member according to claim 1 or claim 2, wherein an average surface roughness Ra', which is obtained by extending a center line average roughness areally, of the film having the fine irregularities mainly composed of alumina is 5 nm or more; and a surface area ratio $Sr = S / S_0$ of the film is 1.1 or more, provided that $S_0$ represents an area of an ideally flat measuring surface, and S represents a surface area of an actual measuring surface.

4.  The optical member according to any one of claims 1 to 3, wherein a content of at least one selected from the group consisting of zirconia, silica, titania, and zinc oxide in the thin film layer is 0.001 or more and less than 1.0 in weight ratio with respect to a weight of the film.

5.  The optical member according to any one of claims 1 to 4, wherein the plate crystals are mainly composed of hydroxide of aluminum or hydrate of aluminum oxide.

6.  The optical member according to any one of claims 1 to 5, wherein the thin film layer has a refractive index between the refractive index of the substrate and the refractive index of the fine irregularities.

7.  A method for producing an optical member as defined in claim 1, the method comprising the steps of, in sequence:

    applying on the substrate a solution containing an aluminum compound and at least one compound selected from the group consisting of a zirconium compound, a silicon compound, a titanium compound and a zinc compound to form a coating; and
    subjecting the coating to warm water treatment to precipitate plate crystals mainly composed of alumina on a surface of the coating, thereby forming the antireflection film comprising fine irregularities and a thin film layer formed under the irregularities, the thin film layer supporting the plate crystals and comprising an oxide containing at least one component selected from the group consisting of zirconia, silica, titania and zinc oxide.

8.  The method according to claim 7, wherein the solution is formed by mixing a solution containing a metal alkoxide or a metal salt of aluminum, and a solution containing a metal alkoxide or a metal salt of at least one selected from the group consisting of zirconium, silicon, titanium and zinc.

9.  The method according to claim 7 or claim 8, wherein the plate crystals are mainly composed of hydroxide of aluminum or hydrate of aluminum oxide.

**10.** The method according to any one of claims 7 to 9, wherein the thin film layer has a refractive index between the refractive index of the substrate and the refractive index of the fine irregularities.

**Patentansprüche**

**1.** Optisches Element, das umfasst:

ein Substrat,
einen Antireflexionsfilm, der eine auf dem Substrat bereitgestellte Dünnfilmschicht umfasst und auf der Dünnfilmschicht bereitgestellte feine Unregelmäßigkeiten aufweist,
wobei die Dünnfilmschicht zumindest eines ausgewählt aus der Gruppe bestehend aus Zirkonoxid, Siliziumoxid, Titanoxid und Zinkoxid enthält,
**dadurch gekennzeichnet, dass** die feinen Unregelmäßigkeiten aus Plattenkristallen gebildet sind, die hauptsächlich aus Aluminiumoxid bestehen, und wobei sich der Brechungsindex zwischen der feinen unregelmäßigen Struktur und dem Substrat kontinuierlich ändert.

**2.** Optisches Element nach Anspruch 1, wobei die feinen Unregelmäßigkeiten, die hauptsächlich aus Aluminiumoxid bestehen, eine Höhe von 0,005 $\mu$m bis 5,0 $\mu$m aufweisen.

**3.** Optisches Element nach Anspruch 1 oder Anspruch 2, wobei die durchschnittliche Oberflächenrauheit Ra', welche durch flächiges Erstrecken einer Mittelliniendurchschnittsrauheit erhalten ist, des Films mit den feinen Unregelmäßigkeiten, die hauptsächlich aus Aluminiumoxid bestehen, 5 nm oder mehr beträgt; und ein Oberflächenverhältnis $Sr = S / S_0$ des Films 1,1 oder mehr beträgt, vorausgesetzt, dass $S_0$ eine Fläche einer ideal flachen Messoberfläche darstellt, und S eine Oberfläche einer tatsächlichen Messoberfläche darstellt.

**4.** Optisches Element nach einem der Ansprüche 1 bis 3, wobei ein Gehalt zumindest eines ausgewählt aus der Gruppe bestehend aus Zirkonoxid, Siliziumoxid, Titanoxid und Zinkoxid in der Dünnfilmschicht 0,001 oder mehr und weniger als 1,0 im Gewichtsverhältnis bezüglich eines Gewichtes des Films beträgt.

**5.** Optisches Element nach einem der Ansprüche 1 bis 4, wobei die Plattenkristalle hauptsächlich aus Hydroxid von Aluminium oder Hydrat von Aluminiumoxid bestehen.

**6.** Optisches Element nach einem der Ansprüche 1 bis 5, wobei die Dünnfilmschicht einen Brechungsindex zwischen dem Brechungsindex des Substrats und dem Brechungsindex der feinen Unregelmäßigkeiten aufweist.

**7.** Verfahren zum Herstellen eines nach Anspruch 1 definierten optischen Elements, wobei das Verfahren, in Reihenfolge, die Schritte umfasst:

Aufbringen einer Lösung, die eine Aluminiumverbindung und zumindest eine Verbindung ausgewählt aus der Gruppe bestehend aus einer Zirkonverbindung, einer Siliziumverbindung, einer Titanverbindung und einer Zinkverbindung enthält, auf das Substrat, um einen Überzug zu bilden; und
Unterziehen des Überzugs einer Warmwasserbehandlung, um Plattenkristalle, die hauptsächlich aus Aluminiumoxid bestehen, auf einer Oberfläche des Überzugs abzuscheiden, wodurch der Antireflexionsfilm, der feine Unregelmäßigkeiten und eine unter den Unregelmäßigkeiten gebildete Dünnfilmschicht umfasst, hergestellt wird, wobei die Dünnfilmschicht die Plattenkristalle trägert und ein Oxid umfasst, das zumindest einen Bestandteil ausgewählt aus der Gruppe bestehend aus Zirkonoxid, Siliziumoxid, Titanoxid und Zinkoxid enthält.

**8.** Verfahren nach Anspruch 7, wobei die Lösung durch Mischen einer Lösung, die ein Metallalkoxid oder ein Metallsalz von Aluminium enthält, und einer Lösung, die ein Metallalkoxid oder ein Metallsalz zumindest eines ausgewählt aus der Gruppe bestehend aus Zirkon, Silizium, Titan und Zink enthält, gebildet wird.

**9.** Verfahren nach Anspruch 7 oder Anspruch 8, wobei die Plattenkristalle hauptsächlich aus Hydroxid von Aluminium oder Hydrat von Aluminiumoxid bestehen.

**10.** Verfahren nach einem der Ansprüche 7 bis 9, wobei die Dünnfilmschicht einem Brechungsindex zwischen dem Brechungsindex des Substrats und dem Brechungsindex der feinen Unregelmäßigkeiten aufweist.

14

**Revendications**

1.  Elément optique comprenant :

    un substrat,
    un film anti-réflexion comprenant une couche de film mince pourvue sur le substrat, et ayant des irrégularités fines pourvues sur la couche de film mince,
    où la couche de film mince contient au moins un élément sélectionné du groupe constitué de zircone, de silice, de titane, et d'oxyde de zinc,
    **caractérisé en ce que** les irrégularités fines sont formées de cristaux plats principalement composés d'alumine et où l'indice de réfraction entre la structure irrégulière fine et le substrat varie de manière continue.

2.  Elément optique selon la revendication 1, dans lequel les irrégularités fines composées principalement d'alumine ont une hauteur de 0,005 $\mu$m à 5,0 $\mu$m.

3.  Elément optique selon la revendication 1 ou la revendication 2, dans lequel une rugosité moyenne de surface Ra', qui est obtenue par l'extension en superficie d'une rugosité moyenne de ligne centrale, du film ayant les irrégularités fines principalement composées d'alumine est de 5 nm ou plus; et un rapport de surface $Sr = S/S_0$ du film est de 1,1 ou plus, à condition que $S_0$ représente une superficie d'une surface de mesure idéalement plate, et S représente une superficie d'une surface de mesure effective.

4.  Elément optique selon l'une quelconque des revendications 1 à 3, dans lequel une teneur d'au moins un élément sélectionné du groupe constitué de zircone, de silice, de titane, et d'oxyde de zinc dans la couche de film mince est de 0,001 ou plus et moins de 1,0 en rapport massique par rapport à un poids du film.

5.  Elément optique selon l'une quelconque des revendications 1 à 4, dans lequel les cristaux plats sont principalement composés d'hydroxyde d'aluminium ou d'hydrate d'oxyde d'aluminium.

6.  Elément optique selon l'une quelconque des revendications 1 à 5, dans lequel la couche de film mince a un indice de réfraction situé entre l'indice de réfraction du substrat et l'indice de réfraction des irrégularités fines.

7.  Procédé de production d'un élément optique selon la revendication 1, le procédé comprenant les étapes qui, dans l'ordre, consistent à :

    appliquer sur le substrat une solution contenant un composé d'aluminium et au moins un composé sélectionné du groupe constitué d'un composé de zirconium, d'un composé de silicium, d'un composé de titane et d'un composé de zinc pour former un revêtement ; et
    soumettre le revêtement à un traitement à l'eau chaude pour faire précipiter des cristaux plats principalement composés d'alumine sur une surface du revêtement, formant ainsi le film anti-réflexion comprenant des irrégularités fines et une couche de film mince formée sous les irrégularités, la couche de film mince supportant les cristaux plats et comprenant un oxyde contenant au moins un composant choisi dans le groupe constitué de zircone, de silice, de titane et d'oxyde de zinc.

8.  Procédé selon la revendication 7, dans lequel la solution est formée en mélangeant une solution contenant un alkoxyde métallique ou un sel métallique d'aluminium, et une solution contenant un alkoxyde métallique ou un sel métallique d'au moins un élément sélectionné du groupe constitué de zirconium, de silicium, de titane et de zinc.

9.  Procédé selon la revendication 7 ou la revendication 8, dans lequel les cristaux plats sont principalement composés d'hydroxyde d'aluminium ou d'hydrate d'oxyde d'aluminium.

10. Procédé selon l'une quelconque des revendications 7 à 9, dans lequel la couche de film mince a un indice de réfraction entre l'indice de réfraction du substrat et l'indice de réfraction des irrégularités fines.

FIG. 1

# FIG. 2

a

b

c

0.10 μm

# FIG. 3

a

b

c

d

0.10 μm

## FIG. 4

## FIG. 5

## FIG. 6

## FIG. 7

## FIG. 8

## FIG. 9

## FIG. 10

## FIG. 11

*FIG. 12*

EP 1 574 881 B1

FIG. 13

# FIG. 14

# FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001091706 A
- JP H09249411 A
- JP H09202649 A
- JP 2001017907 A
- JP H10114543 A
- US 5948481 A
- WO 9845113 A
- US 4830879 A

### Non-patent literature cited in the description

- *Journal of American Ceramic Society,* 1997, vol. 80 (4), 1040-1042
- *Chemistry Letters,* 2000, 864
- *Journal of American Ceramic Society,* 1997, vol. 80 (4), 1.040-1042